# EUROPEAN PATENT APPLICATION

(11) **EP 4 807 673 A1**
(43) Date of publication of application: **16.09.2026**
(21) Application number: 25163934.0
(22) Date of filing: 14.03.2025
(51) Int. Cl.: G06T 7/11, G06V 10/56

(54) **METHOD AND SYSTEM FOR IMAGE SEGMENTATION FOR DEFINING COLOUR GROUPS IN AN IMAGE**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method for image segmentation for defining colour groups in an image, the method comprising: determining a plurality of segments from an image formed of pixels using a segmentation model, wherein each segment comprises data points that correspond to the pixels from the image; determining a colour value for each data point in each segment based on the CIE L*u*v* colour space; merging the plurality of segments into one or more groups in the CIE L*u*v* colour space; determining, for each group, a boundary based on the data points in that group; sorting each data point of each group into a bin based on the CIE L*u*v* colour space, wherein each bin comprises data points from only a single group; converting the colour values of the data points in each bin into a list of Red Green Blue, RGB, values; and merging the lists of RGB value to create an array of RGB values that fall within a group's limits, wherein the group's limits are defined by the range of colour values of the data points of the group.

## Description

### FIELD

The present disclosure relates to a method and a system for image segmentation for defining colour groups in an image.

### BACKGROUND

The traditional television production process, which delivers a single, uniform version of a program to all viewers, is evolving to enable more personalized viewing experiences. This personalization can include features such as selecting alternate audio tracks or accessing supplementary content.

Object-Based Media (OBM) refers to a media production, delivery, and consumption framework in which content is composed of distinct, customizable "objects." This approach allows for the easy creation of multiple program versions tailored to specific viewer needs, such as accommodating colourblind viewers.

### SUMMARY

In a first aspect, there is provided a computer-implemented method for image segmentation for defining colour groups in an image, the method comprising: determining a plurality of segments from an image formed of pixels using a segmentation model, wherein each segment comprises data points that correspond to the pixels from the image; determining a colour value for each data point in each segment based on the CIE L*u*v* colour space; merging the plurality of segments into one or more groups in the CIE L*u*v* colour space; determining, for each group, a boundary based on the data points in that group; sorting each data point of each group into a bin based on the CIE L*u*v* colour space, wherein each bin comprises data points from only a single group; converting the colour values of the data points in each bin into a list of Red Green Blue, RGB, values; and merging the lists of RGB value to create an array of RGB values that fall within a group's limits, wherein the group's limits are defined by the range of colour values of the data points of the group.

The RGB values may be 8-bit RGB values. The list of RGB values may represent all possible RGB values that can be used within the group's limits. The merging may be performed by agglomerative clustering. The segmentation model may be a Segment Anything Model.

The method may further comprise using the arrays of RGB values in a Colour Vision Deficient, CVD, process.

The method may further comprise, after determining the colour value for each data point in each segment, clustering each segment based on the CIE L*u*v* colour value for each data point to identify any segment that contains multiple distinct colours; and, if a segment is identified to contain multiple distinct colours, dividing the respective identified segment into multiple segments based on the multiple distinct colours such that each segment only has one distinct colour or group.

The bins may be arranged in a discrete 2D array, wherein the CIE L*u*v* colour space is quantised to form the discrete 2D array.

The method may further comprise: determining if a bin is occupied by more than one group; and, if a bin is occupied by more than one group, selecting for the bin only a single group. This selection may be based on the bin's distance from the respective group's centroid, as defined in the 2D array, and/or the percentage of the respective group that is present in the bin, such that each bin belongs exclusively to a group.

Determining boundaries for each group in the CIE L*u*v* colour space may comprise using a convex hull algorithm on the data points in each group.

The segments represent objects or coherent shapes within the image.

The segments may overlap such that data points from different segments correspond to the same pixel from the image. The segments may partly overlap or entirely overlap.

The method may further comprise: comparing the data points in each segment to a threshold, wherein the threshold is defined by a Saturation and Lightness in the HSL space; and removing segments from the plurality of segments which fall below the threshold, in order to remove monochromatic data.

The method may further comprise: comparing an area covered by the data points in each segment to an area threshold; and removing segments from the plurality of segments based on the area threshold, e.g. that have an area below the area threshold.

In the step of merging the plurality of segments into groups, each segment may be represented as a single data point for the agglomerative clustering, wherein each data point is the mean value of the CIE L*u*v* colour values of the respective segment.

In the step of merging the plurality of segments into groups, ward linkage may be used as a merging criteria. The merging criteria may further comprise considering an angular similarity of two or more clusters from the white point in the CIE L*u*v* colour space. The merging criteria may further comprise considering an Intersection over Union, IOU, between the CIE L*u*v* colour values of two or more groups.

In a further aspect, there is provided a Data Processing System, DPS, for image segmentation for defining colour groups in an image, the DPS comprising: a processor; and a memory coupled to the processor; wherein the DPS is configured to: determine a plurality of segments from an image formed of pixels by using a segmentation model, wherein each segment comprises data points that correspond to the pixels from the image; determine a colour value for each data point in each segment based on the CIE L*u*v* colour space; merge the plurality of segments into groups; determine boundaries for each group in the CIE L*u*v* colour space based on the data points in each group; sort each data point of each group into a bin based on the CIE L*u*v* colour space wherein each bin comprises data points from only a single group; convert the colour values of the data points in each bin into a list of Red Green Blue, RGB, values that belong to the bin; and merge the lists of RGB value to create an array of RGB values that fall within a group's limits, wherein the group's limits are defined by the range of colour values of the data points of the group.

### BRIEF DESCRIPTION OF THE FIGURES

Aspects of the present disclosure will now be described by way of example with reference to the accompanying figures. In the figures:
Figure 1 is a method for image segmentation for defining colour groups in an image;
Figure 2 shows certain method steps of the method shown in Figure 1;
Figure 3 shows certain method steps of the method shown in Figure 1; and
Figure 4 schematically illustrates an example data processing system capable of performing any of the methods of the invention.

### DETAILED DESCRIPTION

Segmentation is concept within the field of Computer Vision. An image segmentation process may use a neural network to split a given image into multiple regions or shapes known as segments. The aim of the image segmentation process is to extract shapes that are considered by viewers to be meaningful. For example, in an image of a street, the image segmentation process may find segments representing a car, a road, and a block of buildings. It may be the case that the image segmentation process only extracts the shapes of the objects, and has no knowledge of what the object label is (e.g., "car", "road", "building", etc.).

Clustering is the process of grouping data points based on similarity. For colour palette extraction, K- means clustering is often used, wherein a user specifies the number of clusters N present in a data set and the K- means clustering algorithm attempts to partition the data (e.g., colour data points in an image) into N clusters by iteratively assigning each data point to the nearest cluster centroid, then recalculating the centroids until the process converges. Other clustering techniques include hierarchical clustering methods, which can be classified into divisive (starting with all points as a single group and progressively subdividing them) and agglomerative (iteratively merging individual points into clusters) approaches. Hierarchical clustering methods are unsupervised, meaning they do not necessitate prior knowledge of the number of clusters within the dataset.

The present invention employs image segmentation in conjunction with clustering tailored to colour use-cases to extract salient colour groupings (more commonly called the image colour palette) from the desired media. The present inventors have realised that using image segmentation tends to allow for an unsupervised approach where no user input (for example, the target number of colours or colour ranges) is required. The present inventors have further realised that using image segmentation tends to improve compactness and accuracy of resulting colour groupings compared to other methods.

A suitable application of the invention may be in media featuring complex scenes where it is desirable for extracted colour groups to closely align with viewer perception. Perceptibility in colour space generally refers to the smallest difference in colour that the human eye can detect. This concept is important in colour science, particularly in fields like digital imaging, printing, and display technology, where accurate colour reproduction is essential.

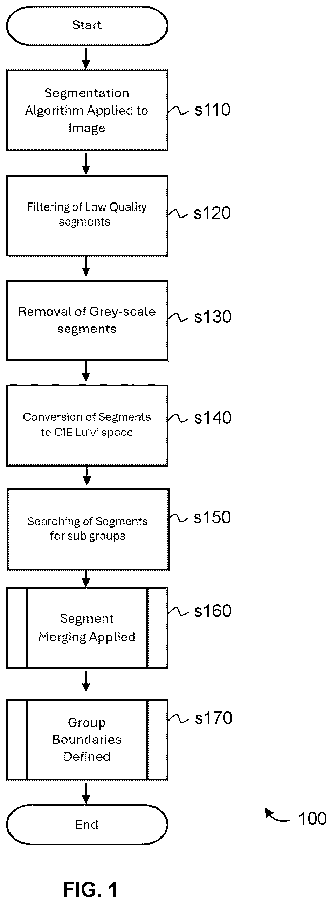

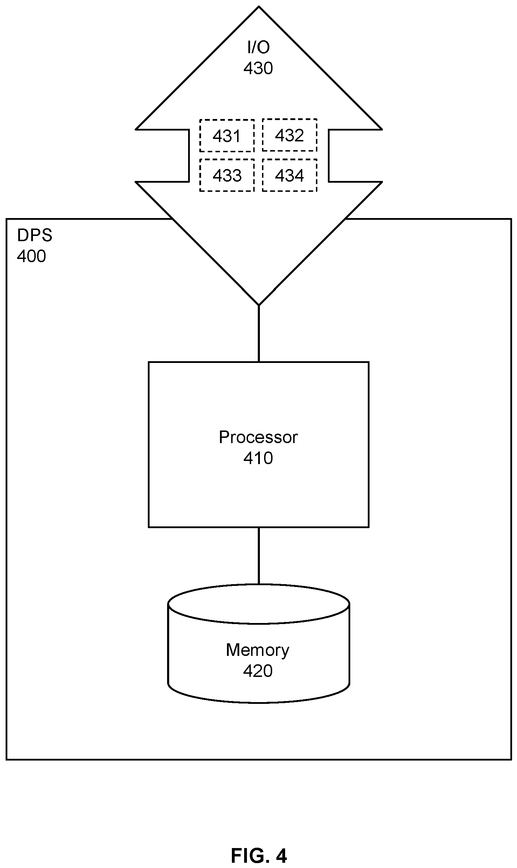

Colour Vision Deficient (CVD) correction algorithms are one such example of where the invention may be applied. By defining coarse colour groups, the CVD correction process can be automated, removing the need for an external agent to specify the colour groups present in the image. Using segmentation to find initial groups, the resulting clustering step tends to achieve higher coherence of colour groups and colour counts that tend to be more accurate when compared to conventional methods. A conventional method, for example randomly seeded colour extraction methods, can fail due to noise in the image or poor initial seeding. Figure 1 is a process flow chart showing certain steps of an embodiment of a method 100 for image segmentation for defining colour groups in an image. The method 100 is a computer-implemented method. A data processing system, as shown in Figure 4 and discussed in more detail later below, may be used to implement the method 100.

At a step s110, a segmentation model (for example, the Segment Anything Model, SAM) is applied to an image formed of pixels (which may also be referred to as a target frame, a media, etc.). The segmentation model determines one or more (e.g., a plurality) of segments, each of which represents an object or coherent shape within the image. Each segment is formed of or comprises data points that correspond to the pixels in the image. The segments may overlap, partly or entirely, as the segmentation model acts over a range of sizes. For example, in an image of a car, the segmentation model may determine a segment for each visible wheel, and a separate segment for the entire car. Because the segments may overlap, the data points from different segments may correspond to the same pixel from the image.

At a step s120, the image area covered by each segment (i.e., the data points in each segment) is calculated and compared to a pre-defined area threshold. In this embodiment, segments which have an area that is less than the area threshold are removed. This tends to be useful for large resolution content in order to reduce the overall number of segments included in the process. This process may be referred to as applying a dominance filter. The dominance filter tends to remove segments that occupy an area less than the area threshold to reduce the number of possible "garbage segments" (or "noise segments") in high resolution content. The term garbage segment may refer to an irrelevant or unwanted part of an image that may be incorrectly identified as a distinct segment or object during the segmentation process.

At a step s130, each remaining segment is compared to a pre-set segmentation threshold. In this embodiment, the segmentation threshold is a threshold in the Hue, Saturation, and Lightness (HSL) space. The HSL threshold may be one or more specific limits (or thresholds) on the Hue, Saturation, and Lightness values of an image in the HSL colour space, and may be used to isolate or filter certain colours or ranges of colours. In this embodiment, segments in which a threshold number (e.g. a majority) of the data points fall below the segmentation threshold are removed. This tends to remove monochromatic data, which can skew groups and cause incorrect groupings. For example, monochromatic data can cause groups to be too close to one another in the colour space and "bleed" the groups together (as every colour likely has some form of near-monochromatic pixel present in the image). Accordingly, the present inventors have realised that filtering monochromatic data tends to yield better clustering results.

The steps s120 and s130 may be referred to as filtering steps.

At a step s140, the data points in each segment are converted to the CIE 1976 L*, u*, v* colour space, referred to herein as the CIE L*u*v* colour space. CIE L*u*v* colour space tends to provide a perceptually uniform colour space which tends to be more suitable for clustering algorithms. At the end of step s140, a colour value has been determined for each data point in each segment based on the CIE L*u*v* colour space.

At a step s150, divisive clustering may be performed on each segment. An appropriate form of divisive clustering may take place inside of each segment. This may be done to identify any cases where a given segment contains multiple distinct colours. Thus, step s150 comprises clustering each segment based on the CIE L*u*v* colour value for each data point in that segment to identify any segment that contains multiple distinct colours. If a segment is identified as containing multiple distinct colours, the identified segment may be divided into multiple segments based on the multiple distinct colours such that each segment only has one distinct colour or group.

For example, a segmentation of a shirt may contain two or more colours if the shirt has text on it or is patterned (e.g. blue and white stripes). If a segment is deemed to contain more than one colour, it is divided into multiple segments.

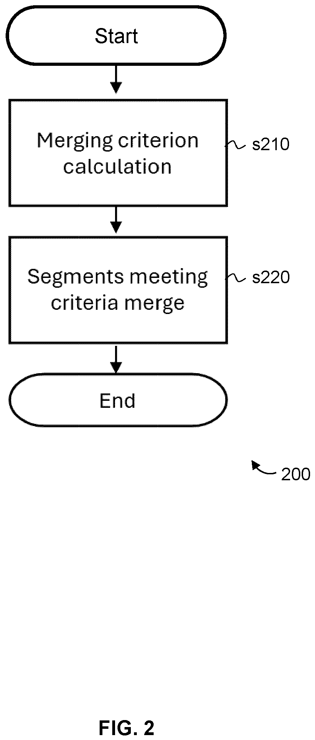

At a step s160, after filtering and pre-processing all the segments, a merging process is performed. The merging process is described in more detail later below with reference to Figure 2. In the merging step, agglomerative clustering is performed across the segments to merge the segments into groups.

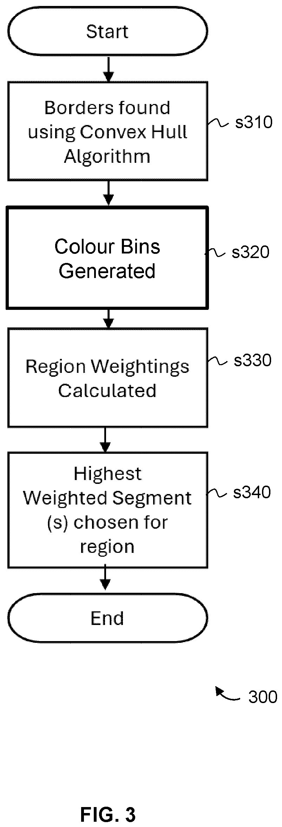

At a step s170, after the merging process of step s160, a boundary determination process is performed. The boundary determination process is described in more detail later below with reference to Figure 3. In the boundary determination process, the boundaries of the groups are defined in the CIE L*u*v* space based on the data points in each group. The CIE L*u*v* colour space is quantized into a grid of discrete bins. During the boundary determination process, all of the data points for each group are sorted into the bins. Bins occupied by multiple groups decide which group owns the bin based on its distance from the group centroids and the percentage of each group present in the bin. Thus, in this embodiment, each bin is occupied by data points from only one group. At the end of the boundary determination process the bins for each group are converted into a list of RGB values that when mapped to the CIE L*u*v* space occupy the bin.

The resulting lists may be merged to create arrays of Red Green Blue (RGB) values that fall within a group's limits. The group's limits are defined by the range of colour values of the data points of the group. The RGB values may be 8-bit RGB values. The list of RGB values represents all possible RGB values that can be used within the group's limits.

The arrays of RGB values can then be used as lookup tables, for example in a Colour Vision Deficient (CVD) process. For example, the arrays of RGB values can be used as lookup tables in colour-masking or colour correction. Creating colour groups in this manner tends to allow for variations in lightness (as bins do not vary along the L axis) and tends to cater to small variances in chroma that were not present in the original groups/image. Simultaneously, it tends to create tighter groups than using, for example, Hue ranges for masking, which tends to reduce erroneous or unnecessary colour manipulations.

Figure 2 shows a merging process 200 that may be used in the merging step s160 shown in Figure 1.

At a step s210, agglomerative clustering is performed across the segments to merge the segments into groups using ward linkage as the merging criterion. Rather than starting from singular data points, as may be conventional in hierarchical clustering, according to the invention each segment is instead considered as a single 'point', represented by the segments mean value. By using hierarchical clustering, there tends to be no need to input cluster counts or to provide prior knowledge of the distribution of colours. Further, grouping clusters hierarchically tends to create different tiers of palette coarseness, allowing for individual tones of colours to be identified and corrected if desired.

An optional but preferable addition to the merging criterion is to consider the angular similarity of two clusters from the white point in the CIE L*u*v* colour space. A large difference in angular similarity between clusters tends to be indicative of a dramatic change in hue, which tends to cause a greater subjective difference in colour grouping than an equally large change along the radius from the white point.

Optionally, an Intersection over Union (IOU) between the data points of two groups may be used in the merging criterion. Consideration of the IOU between the data points of two groups in the merging criterion tends to prevent or reduce cases of poor clustering from skewed means.

At a step s220, segments that meet the merging criteria are merged to form groups.

Figure 3 shows a boundary determination process 300 that may be used in the step s170 shown in Figure 1.

In a step s310, boundaries are defined for each group using the convex hull algorithm across the entirety of the data points in the group. In computational geometry, the convex hull algorithm is used to find the convex hull of a set of points. The convex hull is the smallest convex set that encloses all the points, forming a convex polygon.

As groups are formed based on segment centroids, and segments are formed on spatial information, the points covered by two or more groups can overlap. This leads to cases where a given pixel in the image may have more than one colour group assignment. This may not be desirable or even permitted. To resolve this, each data point from each group is sorted into a bin, and as discussed below with reference to steps s320 to s340, each bin is occupied by data points from only one group.

In a step s320, the CIE L*u*v* colour space is quantized into a discrete 2D array of bins. More specifically, the CIE L*u*v* colour space is sorted into a discrete 2D array of bins along the u' and v' axes (i.e., the bins do not vary along the L axis). In this embodiment, a plurality of instances of the 2D array of bins is generated. Each group populates a respective instance of the 2D array of bins with all the data points in the group. Accordingly, there is provided a set of 2D arrays of bins, with each 2D array of the set of 2D arrays including data points from a respective group. Each 2D array of the set of 2D arrays of bins is then merged to identify bins that are occupied by data points from more than one group.

In a step s330, for each bin that contains data points from more than one group, region weightings for that bin are calculated. For each group present in the bin, the respective region weighting is the ratio of the number of data points from the group present in the bin to the total number of data points in that group. In other words, the region weighting represents a fraction of the respective group that is present in the bin.

The step s330 may further comprise calculating, for each group present in the bin, a distance between the region represented by the bin and the centroid of the group. More specifically, the distance may be calculated from the centre of the region represented by the bin to the centroid of the group.

In a step s340, for each bin that contains data points from more than one group, only a single group for that bin is selected. The group that is selected for a bin is based on the bin's distance from the respective group's centroid, as defined in the 2D array, and the percentage of the respective group that is present in the bin (i.e., the region weighting). For example, the group that is selected for the bin may be selected based on the region weightings, where the region weightings are scaled based on a distance from the group centroid. The group that is selected for the bin may be the group having the highest region weighting and/or the highest scaled region weighting. This is performed so that each bin belongs exclusively to a single group. In this manner, for bins occupied by multiple groups, it is determined which group "owns" the bin based on its distance from the group centroids and the percentage of each group present in the bin.

Accordingly, a 2D grid of bins, wherein each bin is either assigned to a single group or to no group is provided. Thus, the issue of pixels being shared between groups is resolved. The collection of bins for a group is converted to a list of all the possible L, u', and v' values that they encapsulate, thereby fully representing the colour groups. These final representations of groups become image agnostic, as they represent all the colours that exist in a given enclosed region in the CIE L*u*v* space.

Once all bins are exclusively assigned to a group, the bins for each group are converted to a list of RGB values that, when mapped to the CIE L*u*v* space, occupy the bin. The resulting lists may be merged to create arrays of RGB values that fall within a group's limits (i.e., a list of RGB values that correspond to the L, u', and v' values that a group encapsulates).

Figure 4 schematically illustrates an example data processing system (DPS) 400 capable of performing any of the methods described above. The DPS 400 comprises a processor 410 operably coupled to both a memory 420 and an interface (I/O) 430.

The memory 420 can optionally comprise computer program instructions which, when executed by the processor 410, cause the data processing system 400 to carry out any of the methods described above.

The interface 430 can optionally comprise one or both of a physical interface 431 configured to receive a data carrier having such instructions stored thereon and a receiver 432 configured to receive a data carrier signal carrying such instructions.

The receiver 432, when present, can be configured to receive messages. It can comprise one or more wireless receiver modules and/or one or more wired receiver modules. The interface 430 can optionally comprise a transmitter 433 configured to transmit messages. The transmitter 433, when present, can comprise one or more wireless transmitter modules and/or one or more wired transmitter modules.

The interface 430 can optionally comprise one or more user interface devices 434.

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

The terms "top", "bottom", "side", "front", "back", "forward", "rear", "clockwise", "anticlockwise" and other terms describing the orientation of features are not intended to be limiting and, where used, are purely included in order to facilitate the description of the relative location of these features in the context of the accompanying drawings. In use, or during storage, the features may be disposed in other orientations.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method for image segmentation for defining colour groups in an image, the method comprising:
determining a plurality of segments from an image formed of pixels using a segmentation model, wherein each segment comprises data points that correspond to the pixels from the image;
determining a colour value for each data point in each segment based on the CIE L*u*v* colour space;
merging the plurality of segments into one or more groups in the CIE L*u*v* colour space;
determining, for each group, a boundary based on the data points in that group;
sorting each data point of each group into a bin based on the CIE L*u*v* colour space, wherein each bin comprises data points from only a single group;
converting the colour values of the data points in each bin into a list of Red Green Blue, RGB, values; and
merging the lists of RGB value to create an array of RGB values that fall within a group's limits, wherein the group's limits are defined by the range of colour values of the data points of the group.

2. The method of claim 1, further comprising using the arrays of RGB values in a Colour Vision Deficient, CVD, process.

3. The method of claim 1 or 2, further comprising:
after determining the colour value for each data point in each segment, clustering each segment based on the CIE L*u*v* colour value for each data point to identify any segment that contains multiple distinct colours; and,
if a segment is identified to contain multiple distinct colours, dividing the respective identified segment into multiple segments based on the multiple distinct colours such that each segment only has one distinct colour or group.

4. The method of any preceding claim, wherein the bins are arranged in a discrete 2D array, wherein the CIE L*u*v* colour space is quantised to form the discrete 2D array.

5. The method of claim 4, further comprising:
determining if a bin is occupied by more than one group; and,
if a bin is occupied by more than one group, selecting for the bin only a single group.

6. The method of any preceding claim, wherein determining boundaries for each group in the CIE L*u*v* colour space comprises using a convex hull algorithm on the data points in each group.

7. The method of any preceding claim, wherein the segments represent objects or coherent shapes within the image.

8. The method of any preceding claim, wherein the segments overlap such that data points from different segments correspond to the same pixel from the image.

9. The method of any preceding claim, further comprising:
comparing the data points in each segment to a threshold, wherein the threshold is defined by a Saturation and Lightness in the HSL space; and
removing segments from the plurality of segments which fall below the threshold, in order to remove monochromatic data.

10. The method of any preceding claim, further comprising:
comparing an area covered by the data points in each segment to an area threshold; and
removing segments from the plurality of segments based on the area threshold.

11. The method of any preceding claim, wherein, in the step of merging the plurality of segments into groups, each segment is represented as a single data point for the agglomerative clustering, wherein each data point is the mean value of the CIE L*u*v* colour values of the respective segment.

12. The method of any preceding claim, wherein, in the step of merging the plurality of segments into groups, ward linkage is used as a merging criteria.

13. The method of claim 12, wherein the merging criteria further comprises considering an angular similarity of two or more clusters from the white point in the CIE L*u*v* colour space.

14. The method of claim 12 or 13, wherein the merging criteria further comprises considering an Intersection over Union, IOU, between the CIE L*u*v* colour values of two or more groups

15. A Data Processing System, DPS, for image segmentation for defining colour groups in an image, the DPS comprising:
a processor; and
a memory coupled to the processor;
wherein the DPS is configured to:
determine a plurality of segments from an image formed of pixels by using a segmentation model, wherein each segment comprises data points that correspond to the pixels from the image;
determine a colour value for each data point in each segment based on the CIE L*u*v* colour space;
merge the plurality of segments into groups;
determine boundaries for each group in the CIE L*u*v* colour space based on the data points in each group;
sort each data point of each group into a bin based on the CIE L*u*v* colour space wherein each bin comprises data points from only a single group;
convert the colour values of the data points in each bin into a list of Red Green Blue, RGB, values that belong to the bin; and
merge the lists of RGB value to create an array of RGB values that fall within a group's limits, wherein the group's limits are defined by the range of colour values of the data points of the group.
